# EUROPÄISCHE PATENTSCHRIFT

(11) **EP 1 075 609 B1**
(45) Veröffentlichungstag und Bekanntmachung des Hinweises auf die Patenterteilung: **16.10.2002**
(21) Anmeldenummer: 99924864.4
(22) Anmeldetag: 03.05.1999
(51) Int. Cl.: F16F 7/12

(54) **TRAGSTRUKTUR MIT EINEM DEFORMATIONSELEMENT MIT SCHRÄGER KRAFTEINLEITUNG**
SUPPORT STRUCTURE COMPRISING A DEFORMATION ELEMENT WITH OBLIQUE FORCE INTRODUCTION
STRUCTURE PORTEUSE PRESENTANT UN ELEMENT DE DEFORMATION AVEC APPLICATION DE FORCES OBLIQUE

(30) Priorität: 07.05.1998 DE 19820433
(43) Veröffentlichungstag der Anmeldung: 14.02.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); KRUSE, Carsten, D-53797 Lohmar (DE); STRIGL, Raimund, D-85084 Reichertshofen (DE)
(74) Vertreter: Kahlhöfer, Hermann, Dipl.-Phys.
(86) Internationale Anmeldenummer: EP9902993
(87) Internationale Veröffentlichungsnummer: WO99057454

(56) Entgegenhaltungen:
- EP-A- 0 009 654
- DE-A- 19 522 575
- DE-A- 19 650 647
- US-A- 3 865 415
- US-A- 4 327 938
- US-A- 4 666 130
- US-A- 4 822 011
- US-A- 5 599 043
- PATENT ABSTRACTS OF JAPAN vol. 1997, no. - , 29. August 1997 (1997-08-29) & JP 09 109920 A (KOBE STEEL LTD), 28. April 1997 (1997-04-28)

## Beschreibung

Die Erfindung betrifft eine Tragstruktur mit einem Deformationselement, insbesondere fiir ein Kraftfahrzeug, zur Absorption von Bewegungsenergie bei einem Aufprall gemäß Oberbegriff von Anspruch 1, sowie ein Verfahren zur Herstellung eines entsprechenden Deformationselementes.

Deformationselemente zur Absorption von Bewegungsenergie werden in unterschiedlichsten Bereichen der Technik eingesetzt. Ein besonderes Anwendungsgebiet fiir derartige Elemente sind Kraftfahrzeuge, deren technische und Sicherheitsstandards es erfordern, daß im Fall von geringen Stößen die Stoßenergie durch entsprechende Elemente im wesentlichen elastisch und im Fall von stärkeren Stößen beispielsweise bei Unfällen, die Bewegungsenergie durch derartige Elemente aufgenommen und in Verformung derselben umbesetzt wird. So sind beispielsweise Deformationselemente bekannt, welche fiir Längsträger eines Fahrzeuges eingesetzt werden und welche bei einem Aufprall bis zu 4 km/h schadensfrei bleiben und bei einem Aufprall bis zu 15 km/h die gesamte Bewegungsenergie aufnehmen und in Verformung umsetzen. Solche Deformationselemente sind in der Regel in die Längsträger zu einer einheitlichen Tragstruktur integriert, so daß bei deren Beschädigung die gesamten Längsträger ausgetauscht werden müssen. Die Aufnahme von im wesentlichen der gesamten Bewegungsenergie durch die Deformationselemente, ohne daß wesentliche Teile dieser Deformationsenergie auf die restlichen Strukturen eines Kraftfahrzeuges übertragen werden, ist eine Forderung, welche auch im Hinblick auf die Erhöhung der Überlebenschancen von Personen bei verunglückten Fahrzeugen erfüllt werden muß.

In der Technik sind zahlreiche Anwendungen von Wabenstrukturen für unterschiedliche Anwendungsfälle bekannt. So werden Wabenstrukturen beispielsweise im Flugzeugbau eingesetzt, wo insbesondere Forderungen nach Leichtbauweise und hoher Festigkeit von Bedeutung sind. Des weiteren sind Wabenstrukturen aus Bereichen bekannt, wo weniger die Festigkeit einer solchen Wabenstruktur als vielmehr die Erhöhung der Oberfläche eine Rolle spielt, wie z.B. bei Katalysator-Trägerkörpern im Abgassystem eines Kraftfahrzeuges zur Abreinigung von im Abgas nach der Verbrennung im Motor noch verbliebenen schädlichen Abgasbestandteilen.

Aus DE-U-89 00 467, EP 0 389 751 A1, GB-2 029 720 A, DE 40 24 942 A1, DE 38 09 490 C1, DE 44 45 557 A1 sind unterschiedliche Konfigurationen und Strukturen der Wabenkörper bekannt. Diese beschriebenen Wabenkörper dienen in der Regel dem Zweck, die Strömungseigenschaften im Inneren der als Strömungskanäle ausgebildeten Kanäle des Matrixkörpers zu Erzielung von verbesserten chemischen Reaktionen zu verbessern. Die den eigentlichen Matrixkörper umgebenden Ummantelungen dienen der Aufnahme der hohen thermischen Belastungen, welchen ein derartiger Katalysator-Trägerkörper im Abgassystem eines Kraftfahrzeuges ausgesetzt ist.

Aus der DE 196 50 647 A1 ist ein Deformationselement für ein Kraftfahrzeug bekannt, bei welchem ein an sich bekannter Wabenkörper, welcher in einem Mantelrohr angeordnet ist, als Deformationselement eingesetzt ist.

Nachteilig bei den bekannten Deformationselementen ist, daß sie entweder vollständig in die Tragstrukturen integriert sind, weshalb im Schadensfall die gesamte Tragstruktur ausgewechselt werden muß, oder daß beim Einsatz von Deformationselementen mit Wabenstruktur im Falle von eingeleiteter hoher Bewegungsenergie relativ rasch ein steiler Anfangsanstieg der Kurve im Deformationskraft-Deformationsweg-Profil (F,s-Profil) auftritt, welcher dazu führen kannt, daß die auftretenden hohen Deformationskrafte direkt in die Tragstruktur weitergeleitet werden und diese dadurch plastisch deformiert wird.

Es ist daher die Aufgabe der vorliegenden Erfindung, eine Tragstruktur mit einem Deformationselement zur Absorption von Bewegungsenergie zu schaffen, welches gegenüber einem herkömmlichen Deformationselement entsprechend der jeweiligen anwendungsspezifischen Auslegung ein gewünschtes F,s-Profil gewährleistet und welches insbesondere fiir Stoßfängersysteme von Fahrzeugen einsetzbar ist.

Diese Aufgabe wird durch eine Tragstruktur mit einem Deformationselement zur Absorption von Bewegungsenergie mit den Merkmalen gemäß Anspruch 1 gelöst. Ein Verfahren zur Herstellung eines entsprechenden Deformationselementes ist im Anspruch 32 angegeben.

Zweckmäßige Weiterbildungen sind in den abhängigen Ansprüchen definiert.

Gemäß der Erfindung weist die Tragstruktur ein Deformationselement, insbesondere für Kraftfahrzeuge, zur Absorption von Bewegungsenergie bei einem Aufprall auf, welches zumindest einseitig an der Tragstruktur abgestützt ist. Das Deformationselement weist einen wabenförmigen Matrixkörper mit Längsachse auf, welcher durch Wände gebildete Hohlräume besitzt. Gemäß der Erfindung ist das Deformationselement so an der Tragstruktur befestigt, daß bei einem Aufprall entwickelte Kräfte unter einem Winkel bezüglich einer Haupterstreckungsrichtung der Wände in diese einleitbar sind.

Vorzugsweise ist der Matrixkörper aus zumindest einer, zumindest teilweise strukturierten Blechlage vorzugsweise in eine zylindrische Form geschlungen, gewickelt oder gestapelt. Ein derartig hergestellter wabenförmiger Matrixkörper ist beispielsweise aus einer Kombination von gewellten und im wesentlichen glatten Blechlagen, welche alternierdend zueinander angeordnet sind, hergestellt. Dadurch entstehen im Innern des Matrixkörpers Hohlräume, welche durch die durch die Blechlagen gebildeten Wände begrenzt sind. Die Wände erstrecken sich im wesentlichen in Richtung der Längsachse des Matrixkörpers. Die Hohlräume sind vorzugsweise auch als Kanäle ausgebildet, welche sich beispielsweise koaxial zur Längsachse des Matrixkörpers erstrecken. Wenn ein Deformationselement mit einem derartigen Matrixkörper so an der Tragstruktur befestigt ist, daß die bei einem Aufprall eingeleiteten Kräfte im wesentlichen in Richtung der Wände wirken, wird die Deformationsenergie unter anderem dadurch aufgenommen, daß die Wände eine Knickbelastung erfahren, d.h. gestaucht werden, wodurch sich ein relativ starker Anstieg unmittelbar nach erfolgter Einleitung der Bewegungsenergie im Deformationskraft-Deformationsweg-Profil (F,s-Profil) ergibt. Dieser steile Anfangsanstieg bzw. Anfangspeak im F,s-Profil führt dazu, daß relativ hohe Deformationskräfte über das Deformationselement, bevor dieses sich deformiert und dadurch Bewegungsenergie aufnimmt, in die Tragstruktur eingeleitet werden. Dadurch ist es möglich, daß die Tragstruktur plastische Verformungen infolge der Deformationskraftspitzen erfährt. Diese sind jedoch zu vermeiden, da aufgabengemäß das Deformationselement die Bewegungsenergie aufnehmen soll und verhindern soll, daß die Tragstruktur plastische Verformungen erleidet.

Erfindungsgemäß ist daher vorgesehen, das Deformationselement so auszubilden bzw. bezüglich der Tragstruktur so anzuordnen, daß die bei einem Aufprall entwickelten Kräfte unter einem Winkel auf die bezüglich der Längsachse gebildete Haupterstreckungsrichtung der Wände eingeleitet werden. Durch eine derartige schräge Krafteinleitung wird erreicht, daß die Wände sich leichter insbesondere bei Einsetzen der Verformung in die Hohlräume deformieren, so daß der Anfangspeak im F,s-Profil zumindest stark reduziert wird. Mittels eines derartigen erfindungsgemäßen Deformationselements kann somit zumindest der Anfangsbereich des F,s-Profils zielgerichtet im Sinne einer Verbesserung der Absorption von eingeleiteter Bewegungsenergie beeinflußt werden.

Vorzugsweise ist gemäß einem Ausführungsbeispiel der Erfindung die Haupterstreckungsrichtung der die Wände bildenden Blechlagen unter einem Winkel bezüglich der Längsachse angeordnet Das kann beispielsweise durch schräges Wickeln der einzelnen strukturierten Blechlagen erzielt werden. Wenn die Haupterstreckungsrichtung der Wande mit der Längsachse einen Winkel bilden, so kann erfindungsgemäß das Deformationselement so an der Tragstruktur befestigt werden, daß die Längsachse im wesentlichen senkrecht auf der Abstützung an der Tragstruktur angeordnet ist.

Es ist jedoch auch möglich, einen herkömmlichen Matrixkörper zu verwenden, bei dem die Haupterstreckungsrichtung der Wände im wesentlichen koaxial zu der Längsachse des Matrixkörpers verläuft, wobei der Matrixkörper aber so an der Tragstruktur befestigt ist, daß seine Längsachse unter einem nicht rechten Winkel zur Abstützung an der Tragstruktur angeordnet ist.

Gemäß einem weiteren Ausführungsbeispiel ist es auch möglich, die Blechlage bzw. die Blechlagen so zu wickeln, schlingen oder stapeln, daß ein kegelförmiger oder kegelstumpfförmiger (konischer) Matrixkörper gebildet wird. Ein solcher kegelförmiger oder kegelstumpfförmiger Matrixkörper wird vorzugsweise an der Tragstruktur so angeordnet, daß dessen Längsachse im wesentlichen senkrecht zu der Abstützung an der Tragstruktur liegt, wodurch ebenfalls eine bezüglich der Haupterstreckungsrichtung der Wände schräge Krafteinleitung realisiert wird.

Gemäß einem weiteren Ausführungsbeispiel ist in den die Wände bildenden Blechlagen eine Vielzahl von Solldeformationsstellen angeordnet, so daß das F,s-Profil des Deformationselementes zumindest abschnittsweise bzw. zumindest in einem Abschnitt konstant ausgebildet ist. Ein wesentlicher Vorteil eines zumindest abschnittsweise konstant ausgebildeten F,s-Profils besteht darin, daß beim Einleiten von Bewegungsenergie in das Deformationselement dieses gleichmäßig die Verformung aufnimmt und weitestgehend ein Übertragen der absorbierten Bewegungsenergie auf die Tragstruktur verhindert wird.

Es ist jedoch auch möglich, die Solldeformationsstellen in den Wänden des Matrixkörpers so vorzusehen und so auszubilden, daß das F,s-Profil des Deformationselementes zumindest in einem Abschnitt bzw abschnittsweise progressiv ansteigend ausgebildet ist Der Anstieg im F,s-Profil ist dabei so ausgebildet, daß am Ende des Deformationsweges, bei welchem die sogenannte Restblocklänge des Deformationselementes erreicht wird, die Maximalkraft vorzugsweise unterhalb eines solchen Wertes liegt, bei welchem die Tragstruktur plastische Verformungen erleidet.

Vorzugsweise sind die Hohlräume des Matrixkörpers als Kanäle ausgebildet, so daß der Matrixkörper eine Vielzahl von Kanälen aufweist. Vorzugsweise werden Blechlagen verwendet mit einer Dicke von 0,02 mm bis 0,2 mm, wobei der Matrixkörper bevorzugt eine Zelldichte von 50 bis 600 cpsi (cells per square inch) besitzt. Bei Verwnedung von Aluminiumblechen ist eine Dicke von 0,05 bis 0,2 mm bevorzugt, bei Stahlblechen, insbesondere aus Tiefziehstahl, eine Dicke von 0,02 bis 0,15 mm.

Vorzugsweise ist das Deformationselement zumindest an einer Stirnseite, an welcher sich eine Abstützung an der Tragstruktur befindet, mit einer Lochplatte mit zumindest einem Loch versehen. Das zumindest eine Loch der Lochplatte ist so dimensioniert, daß im Bereich des Loches befindliche Teile des Matrixkörpers bei eingeleiteter hoher Bewegungsenergie in Richtung des Deformationsweges in das Loch bzw. durch das Loch versetzbar sind. Das Versetzen von im Bereich des Loches befindlichen Teilen des Matrixkörpers durch das Loch bzw. in das Loch hinein in Richtung des Hauptdeformationsweges tritt bereits vor Erreichen der Restblocklänge auf, wobei ein Abscheren von einzelnen Blechlagen im Bereich des Randes der Löcher und ein Stauchen der Blechlagen im wesentlichen gleichzeitig auftreten, so daß Teile des Matrixkörpers in das Loch ein- bzw. durch dieses hindurchtreten. Nach Erreichen der Restblocklänge weist das Deformationselement noch eine gewisse Restporosität auf Vorzugsweise weist der Matrixkörper eine Ummantelung auf, welche so ausgebildet ist, daß sie sich beim Deformieren gleichmäßig, vorzugsweise ringartig faltet.

Der wesentliche Vorteil dieser erfindungsgemäßen Ausbildung gegenüber einer Ausbildung mit einer Abschlußplatte ohne Loch, d.h. keiner Lochplatte, besteht unter anderem darin, daß bei Erreichen des maximalen Deformationsweges die sich ergebende Restblocklänge verringert und dadurch der maximale Deformationsweg erhöht wird, da das zumindest eine Loch in der Lochplatte so bemessen ist, daß unter der Wirkung von Stauch- und Scherkräften Teile des Matrixkörpers, welche im Bereich des Loches angeordnet sind, bei weiterem Einleiten von Bewegungsenergie in das Deformationselement diese Teile des Matrixkörpers sich in das Loch hineinschieben bzw. auch aus dem Loch herausschieben. Dadurch wird im F,s-Profil der steile Anstieg bei Erreichen der Restblocklänge, d.h. der hintere Bereich des F,s-Profils, wie sie sich bei einem Deformationselement mit geschlossener, an dessen Stirnseite angeordneter Abdeckplatte bzw bei dessen kompletter stirnseitiger Anlage an der Abstützung der Tragstruktur ergibt, weiter nach hinten, d.h. im F,s-Profil nach rechts verschoben.

Vorzugsweise weist die Lochplatte mehrere Löcher auf, welche in der Fläche der Lochplatte gleichmäßig oder ungleichmäßig verteilt sein können. Die Größe der Löcher ist dabei vorzugsweise so bemessen, daß sich unter der Wirkung der Deformations- und Scherkräfte beim Einleiten von Bewegungsenergie die im Bereich der Löcher angeordneten Teile des Matrixkörpers im wesentlichen in alle Löcher hinein- bzw. durch diese hindurchschieben können.

Vorzugsweise ist der Rand des jeweiligen Loches so ausgebildet, daß er über möglichst viele Blechlagen verläuft. Dies ist erforderlich, damit die im Bereich des Lochrandes befindlichen Blechlagen des Matrixkörpers mittels Scherkräften abgeschert werden und nicht einzelne Teile des Matrixkörpers ohne Abscheren teleskopartig durch das Loch hindurch versetzt werden. Vorzugsweise sind die Löcher im Außenbereich der Lochplatte angeordnet. Dies hat den Vorteil, daß dadurch ein Zusammenwirken von Ummantelung und Matrixkörper beim Deformieren realisierbar ist. Indem insbesondere im Außenbereich Teile des Matrixkörpers durch die Löcher der Lochplatte in Richtung des Deformationsweges versetzbar sind, ist es möglich, daß der dadurch geschaffene Hohlraum durch die durch die Ummantelung bei der Deformation aufgebrachte Seitenkraft zusammengedrückt wird. Dadurch ist eine Verkürzung der Restblocklänge erzielbar.

Gemäß einem weiteren bevorzugten Ausführungsbeispiel sind ca. 20 bis 80%, vorzugsweise 40 bis 60%, der Gesamtfläche der Lochplatte als Löcher ausgebildet. Dadurch ist genügend Freiraum gegeben, durch welchen bzw. in welchen abgescherte Teile des Matrixkörpers beim Einleiten von hoher Bewegungsenergie durch die Lochplatte hindurchtreten können. Vorzugsweise sind die Ränder der Löcher so ausgebildet, daß sie über mindestens zehn Blechlagen verlaufen. Beispielsweise kann bei Vorsehen eines einzigen Loches bei einem Durchmesser des Matrixkörpers von 90 mm der Lochdurchmesser ca. 55 mm betragen. Je nach Einsatzzweck und gewünschtem F,s-Profil können die entsprechenden Löcher in der Lochplatte bezüglich ihrer Anordnung und bezüglich ihrer Größe jedoch davon abweichen.

Gemäß einer weiteren Ausbildung ist die Lochplatte vorzugsweise mit ihrem Rand in die Abstützung der Tragstruktur integriert, so daß ausreichende Stützkräfte vorhanden sind und andererseits eine hohe Deformationsenergie eingeleitet werden kann.

Gemäß einer Weiterbildung der Erfindung ist die Ummantelung in Form von mehreren separaten Mantelringen oder in Form eines durchgängigen Mantelrohres mit Sollknickstellen ausgebildet. Je nach Ausbildung der Ummantelung wird in mehr oder weniger starkem Maße die Bewegungsenergie von sowohl dem Matrixkörper als auch der Ummantelung aufgenommen. Das Deformationselement ist in der Tragstruktur einseitig oder beidseitig so abgestützt bzw. gehalten, daß die zu absorbierende Bewegungsenergie im wesentlichen in Längsrichtung des Deformationselementes einleitbar ist. Durch die Ausbildung des wabenförmigen Matrixkörpers mit einer Vielzahl von Kanälen, durch die Ausbildung einer Lochplatte mit definiert dimensionierten Löchern, durch die Materialstärken und Materialarten usw. besteht eine hohe Entwurfsflexibilität im Hinblick auf die Erzielung spezieller, auf jeweilige Anwendungsfälle ausgerichtete Dimensionierungen des erfindungsgemäßen Deformationselementes. Es ist somit möglich, ein gewünschtes F,s-Profil zu realisieren.

Wenn das Deformationselement rohrförmig ausgebildet ist, so wird dies auch als Deformationsrohr (DEFO-Rohr) bezeichnet. Prinzipiell wird das Deformationselement mittels einer entsprechenden Formgebung und Wahl der oben genannten Parameter so ausgebildet, daß ein möglichst langer Verformungsweg bei gegebenen Bauteilabmessungen erzielt wird. Dies ist beispielsweise möglich, indem zur Aufnahme der Bewegungsenergie die Ummantelung und/oder die Matrix gefaltet bzw. komprimiert wird/werden.

Ein weiterer Vorteil eines derartigen erfindungsgemäßen Deformationselementes besteht darin, daß über ein spezielles Design des Deformationselementes einschließlich seiner Ummantelung eine leichte Montage bzw. Demontage erzielt werden kann. Des weiteren dient das jeweilige Design der Ummantelung sowie der jeweiligen Wabenstruktur des Matrixkörpers der Erzielung von Tragfähigkeitseigenschaften, welche gewährleistet werden müssen, wenn das erfindungsgemäße Deformationselement in Rahmen- bzw. Tragstrukturen integriert bzw. eingebettet ist, so daß Belastungen übertragbar sind, bei denen das Deformationselement auch die bei Stoßbelastung auftretende Bewegungsenergie aufzunehmen in der Lage ist. Des weiteren kann über eine geeignete Materialauswahl, falls der jeweilige Einsatzzweck dies erfordert, korrosionsfestes Material für das erfindungsgemäße Deformationselement verwendet werden. Es ist jedoch auch möglich, aus Kostengründen auf korrosionsfeste Materialien zu verzichten und die für das erfindungsgemäße Element verwendeten Materialien mit an sich bekannten Korrosionsschutzüberzügen zu versehen.

Sowohl über die Auslegung der Matrix als auch der Ummantelung kann somit das jeweilige F,s-Profil zielgerichtet beeinflußt werden. Eine im wesentlichen glatte Ummantelung dient beispielsweise einer hohen Tragfähigkeit. Beispielsweise kann, wenn die Ummantelung als Streckgitter ausgebildet ist, Lochungen oder Unterbrechungen aufweist, ein maximaler Deformationsweg realisiert werden. Über die Anordnung von Sicken, Kerben, Nuten usw. in der Ummantelung kann das spezielle Deformationsverhalten des Deformationselementes ebenfalls zielgerichtet beeinflußt werden. Die Festigkeit kann des weiteren über die jeweilige Dicke der Ummantelung bzw. über den für die Ummantelung ausgewählten Werkstoff beeinflußt werden.

Über die Auslegung des Matrixkörpers kann das Deformationsverhalten auch dadurch zielgerichtet beeinflußt werden, daß beispielsweise Blechlagen mit transversalen Strukturen eingesetzt werden. Ein maximaler Verformungsweg läßt sich erreichen, indem die einzelnen Blechlagen Lochungen, Schlitze und/oder Longitudinalstrukturen aufweisen. Die Festigkeit bzw. das Gewicht des erfindungsgemäßen Deformationselementes kann des weiteren über dessen Zelldichte, die Foliendicke, den Wickeltyp des Matrixkörpers zielgerichtet beeinflußt werden. Auch ist dies beispielsweise über Schrägwellungen über die Anordnung in Form eines Kreuzwickels möglich. Es ist des weiteren auch möglich, den Matrixkörper so auszubilden, daß die radiale Steifigkeit am Rand herabgesetzt wird.

Gemäß einem weiteren Ausführungsbeispiel weist die Ummantelung eine Sicke oder mehrere im wesentlichen quer zu den Kanälen der Matrix angeordnete Sicken auf. Diese Sicken haben den Vorteil, daß bei im wesentlichen in Längsrichtung des Deformationselementes eingeleiteter Bewegungsenergie die Sicken zum einen eine gewisse Anfangselastizität aufweisen und zum anderen Stellen darstellen, an welchen der Mantel zuerst Bewegungsenergie aufnimmt, indem bei entsprechend vorhandenen Deformationskräften die Schenkel einer jeweiligen Sicke aufeinandergefaltet werden, bevor die zwischen den Sicken im wesentlichen glatten Bereiche des Mantels einer direkten weiteren Verformung ausgesetzt sind. Diese Sicken stellen somit Solldeformationsstellen dar. Die Ummantelung des Matrixkörpers weist je nach Anwendung und je nach aufzunehmender Höhe der Bewegungsenergie eine Dicke von 0.3 mm bis 2.0 mm auf Für sehr hohe aufzunehmende Bewegungsenergien sind jedoch auch größere Dicken möglich und sinnvoll. Bei Verwendung von Aluminium als Mantel wird eine Dicke von 0,5 bis 2,0 mm bevorzugt, bei Stahl, insbesondere Tiefziehstahl, eine Dicke von 0,03 bis 1,5 mm.

Vorzugsweise besteht der Matrixkörper in an sich bekannter Weise beispielsweise aus gepackten flachen Blechlagen oder aus einem spiralig, etwa evolventenförmig oder S-förmig im wesentlichen zylindrisch gewickelten Paket. Die einzelnen im Paket aneinanderliegenden Blechlagen können, müssen jedoch nicht, an den Berührungsbereichen verlötet sein.

Gemäß einer weiteren Ausgestaltung ist die Zelldichte des Matrixkörpers in Längsrichtung abschnittsweise variiert. Dies wird beispielsweise dadurch erreicht, daß zusätzliche Blechlagen mit einer geringeren Wellungshöhe bzw. geringerer Wellungsfrequenz als im entsprechenden benachbarten Abschnitt zwischen im wesentlichen glatten Blechlagen eingesetzt werden, wobei die glatten Blechlagen des Abschnitts mit der geringsten Zelldichte vorzugsweise in Längsrichtung der Matrix durchgängig angeordnet sind. Es ist außerdem möglich, die Zelldichte der Matrix in radialer Richtung zu variieren, indem eine Blechlage mit kontinuierlich in eine Richtung ansteigender Wellungsfrequenz beispielsweise zu einer im wesentlichen zylindrischen Wabenstruktur aufgewickelt wird. Die Variation der Zelldichte hat außerdem den Vorteil, daß im Inneren des Wabenkörpers sich schneidende Grenzflächen von Kanalwänden vorhanden sind. An diesen Stellen tritt bei Deformation nicht nur eine Stauchung, sondern auch eine Scherkraft auf, da die Bleche sich gegenseitig zerschneiden oder zerreißen. Ein ähnlicher Effekt kann auch erreicht werden, wenn man zwei oder mehr Wabenkörper hintereinander anordnet, und swar so, daß sich möglichst viele Blechlagen beider Körper an den aneinanderliegenden Stirnseiten kreuzen. Dies kann beispielsweise durch wabenkörper unterschiedlicher Wickelrichtung erreicht werden. Auf diese Weise kann von der Anordnung noch mehr Deformationsenergie bei gleichem Volumen aufgenommen werden.

Gemäß einer weiteren Ausgestaltung weisen die Blechlagen der Matrix im wesentlichen quer zur Richtung der Kanäle sickenartige Strukturen auf, welche auch als Transversalstrukturen bezeichnet werden. Diese Transversalstrukturen dienen dazu, daß bei Einleitung einer entsprechend hohen Bewegungsenergie die Verformung im Inneren des Matrixkörpers an den Transversalstrukturen zuerst einsetzt, um somit ein möglichst gleichmäßiges Aufnahmen der Bewegungsenergie durch den Matrixkörper bzw. durch den Matrixkörper und die Ummantelung zu gewährleisten. Vorzugsweise sind diese Transversalstrukturen in Abständen von 2 mm bis 20 mm angeordnet. Gemäß noch einem weiteren Ausführungsbeispiel weisen die Blechlagen des Matrixkörpers, durch welche die Kanäle gebildet sind, innerhalb der Kanäle seitlich versetzte Kanalabschnitte auf, welche auch als Longitudinalstrukturen bezeichnet werden Diese Longitudinalstrukturen liefern somit keine durchgehenden Kanäle, sondern unterbrochene Kanäle, so daß der Matrixkörper im Inneren eine Struktur aufweist, welche einer Wirbelzellenstruktur, wie sie unter anderem fiir Wärmeubertrager eingesetzt wird, entspricht. Diese Longitudinalstrukturen besitzen den Vorteil, daß zusätzlich über die Länge der abschnittsweise versetzten Kanalabschnitte die die Bewegungsenergie absorbierenden Eigenschaften des erfindungsgemäßen Deformationselementes zielgerichtet beeinflußt werden können. Dadurch ist ein weiterer Parameter gegeben, das F,s-Profil anwendungsspezifisch zu beeinflussen.

Vorzugsweise ist es auch möglich, die Wellungen der Blechlagen in einer gekrümmten Anordnung oder einer Fischgratanordnung oder in einer Kombination aus beiden vorzusehen. Mittels derartiger gekrümmter Wellungen oder in Fischgrätanordnung ausgebildeter Wellungen der Blechlagen kann eine Verteilung der in das Innere des Matrixkörpers eingeleiteten, die Verformung bewirkenden Kräfte zielgerichtet erreicht werden, wodurch ebenfalls das F,s-Profil anwendungsspezifisch beeinflußbar ist

Vorzugsweise ist gemäß einer Weiterbildung der Erfindung der Matrixkörper bzw. sind dessen Kanäle mit einem Schaummaterial ausgeschäumt, wobei vorzugsweise das Schaummaterial ein insbesondere korrosionshemmender Kunststoffschaum ist. Damit wird einerseits, wenn beispielsweise kein nicht-rostender Stahl verwendet wird, verhindert, daß im Inneren der Matrix und der Ummantelung Korrosion auftritt, welche die Deformationseigenschaften nachteilig beeinflussen kann. Andererseits kann durch Auswahl eines entsprechenden Kunststoffschaumes mit definierten Eigenschaften auch die Absorptionsfähigkeit von Bewegungsenergie in dem Element zielgerichtet beeinflußt werden, so daß auch über das Einbringen eines Schaummaterials, das F,s-Profil beeinflußbar ist.

Im Hinblick auf einen bezüglich einer definierten Baulänge zu erzielenden maximalen Deformationsweg ist das Deformationselement bezüglich seines Deformationsverhaltens so ausgelegt, daß der maximale Deformationsweg zwischen etwa 60 bis 200 mm liegt. Je nach Anwendungsfall kann der Deformationsweg auch kleiner oder größer als der angegebene Bereich sein.

Gemäß einem zweiten Aspekt der Erfindung werden insbesondere metallische wabenförmige Matrixkörper in Verbindung mit unter einem Winkel bezüglich der Haupterstreckungsrichtung der Wände des Matrixkörpers eingeleiteten Kräften als ein Deformationselement zur Absorption von Bewegungsenergie insbesondere in einem Stoßfängersystem eines Fahrzeuges verwendet. Das erfindungsgemäße Deformationselement ist dabei so dimensioniert, daß der Anfangspeak im F,s-Profil zumindest stark reduziert ist. Damit wird vermieden, daß zu Beginn der Einleitung von Bewegungsenergie in das Deformationselement große Kräfte auf die Tragstruktur übertragen werden, so daß deren Beschädigung weitestgehend ausgeschlossen ist.

Damit ist es möglich, auch sehr hohe Bewegungsenergien einzuleiten, ohne daß die Tragstruktur beschädigt wird. Das verbesserte Deformationspotential eines solchen Deformationselementes liegt somit bei einer reduzierten Restblocklänge. Damit ist es möglich, das erfindungsgemäße Deformationselement als Montageteil auszubilden, welches im Falle von eingebrachter, in Verformung umgesetzter Bewegungsenergie mit geringem Montageaufwand demontierbar und durch ein neues Element ersetzbar ist. So wird nicht nur die Sicherheit bei Auffahrunfällen bzw. Aufprallereignissen erhöht, sondern es wird auch die Reparaturfreundlichkeit eines mit einem erfindungsgemäßen Deformationselement ausgerüsteten Stoßfängersystems eines Fahrzeuges erhöht.

Ohne aufwendige Konstruktionsänderungen herkömmlicher Wabenkörper gibt es eine weitere Möglichkeit, ein Deformationselement mit den gewünschten Eigenschaften, nämlich ohne wesentlichen Anfangspeak im F,s-Profil herzustellen. Dazu muß nur ein beliebiger, in an sich bekannter Weise hergestellter Wabenkörper einer gezielten Erststauchung unterworfen werden, was bei der Herstellung oder am Einbauort erfolgen kann. Die dazu eingesetzte Kraft sollte größer sein als das Maximum der Kraft im Anfangspeak des F,s-Profils des noch nicht gestauchten Wabenkörpers. So wird der Anfangspeak schon vor dem Ersteinsatz des Deformationselementes durchlaufen und beseitigt. Es entsteht ein schon etwas vorverformter Wabenkörper mit der erfindungsgemäßen schrägen Krafteinleitung in seine Wände.

Weitere Vorteile, Merkmale und Anwendungsmöglichkeiten der Erfindung werden nun anhand von Ausführungsbeispielen unter Bezugnahme auf die beigefügten Zeichnungen detailliert erläutert, wobei:
- Fig. 1: eine an sich bekannte Wabenstruktur eines Matrixkörpers eines Deformationselementes im unverformten Zustand zeigt;
- Fig. 2: eine prinzipielle Anordnung eines Deformationselementes an der Tragstruktur gemäß einer ersten Ausführungsform der Erfindung zeigt;
- Fig. 3: eine prinzipielle Anordnung eines Deformationselementes an der Tragstruktur gemäß einer zweiten Ausführungsform der Erfingung zeigt;
- Fig. 4: eine prinzipielle Anordnung eines Deformationselementes an der Tragstruktur gemäß einer dritten Ausführungsform der Erfindung zeigt;
- Fig. 5: eine prinzipielle Darstellung eines Mantelrohres zur Aufnahme eines zylindrischen wabenförmigen Matrixkörpers zeigt;
- Fig. 6: eine Schnittansicht eines Deformationselementes gemäß der Erfindung mit vereinfachter Darstellung des Matrixkörpers zeigt;
- Fig. 7: das Deformationselement gemäß Fig. 6 in deformiertem Zustand zeigt;
- Fig. 8: die prinzipielle Anordnung eines durch die Tragstruktur einseitig aufgenommenen Deformationselementes gemäß der Erfindung zeigt;
- Fig. 9: den prinzipiellen Herstellungsvorgang eines wabenförmigen Matrixkörpers zeigt;
- Fig. 10: einen Schnitt in Richtung der Kanäle des wabenförmigen Matrixkörpers zeigt, wobei in Richtung der Kanäle eine unterschiedliche Zelldichte realisiert ist;
- Fig. 11: ein Deformationselement gemäß einem weiteren Ausführungsbeispiel der Erfindung mit einem Matrixkörper mit in radialer Richtung variierender Zelldichte zeigt;
- Fig. 12: ein Deformationskraft-Deformationsweg-Profil (F,s-Profil) eines ersten Ausführungsbeispiels der Erfindung zeigt; und
- Fig. 13: ein F,s-Profil eines zweiten Ausführungsbeispiels gemäß der Erfindung zeigt.

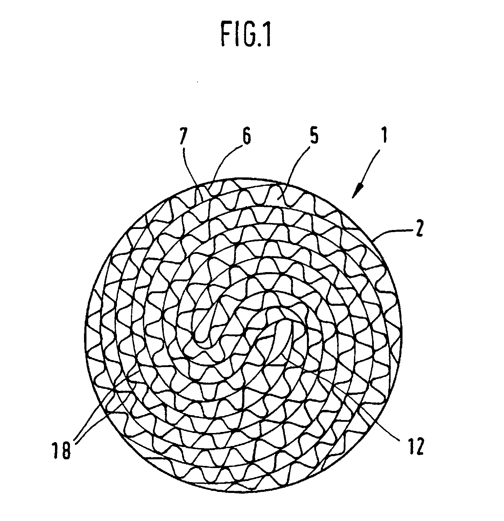

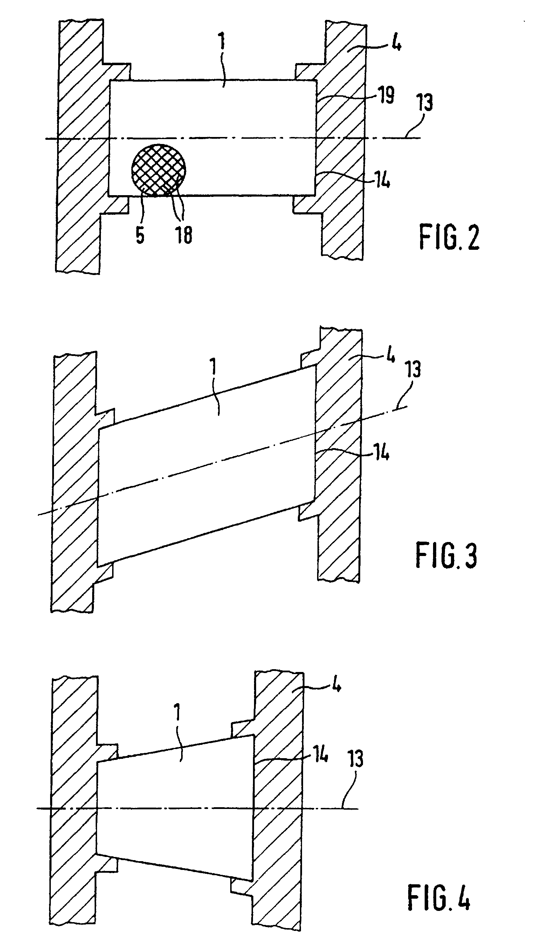

In Fig. 1 ist eine Querschnittansicht eines wabenförmigen Matrixkörpers 1 dargestellt. Der wabenförmige Matrixkorper 1 ist aus sich abwechselnden gewellten Blechlagen 6 und im wesentlichen glatten Blechlagen 7 mit zwei Spiralarmen 12 gewickelt. Die glatten Blechlagen 7 liegen auf den Wellungen der gewellten Blechlagen 6 im wesentlichen auf, so daß eine Vielzahl von Kanälen 5 im Innern des Matrixkörpers gebildet ist. Diese Kanale 5 sind durch Wände 18, welche durch die Blechlagen 6, 7 gebildet sind, voneinander getrennt. Der Matrixkörper 1 ist mit einer Ummantelung 2 umgeben Dadurch ist das Deformationselement sehr kompakt ausgebildet. Ein derartiges Deformationselement ist so in einer Tragstruktur 4 (siehe Fig. 2, 3, 4) angeordnet, daß die Bewegungsenergie, welche mit dem Deformationselement absorbierbar ist, im wesentlichen unter einem Winkel zur Längsachse 13 des Deformationselementes eingeleitet wird.

Die Fig. 2 bis 4 zeigen drei Ausführungsbeispiele der Anordnung des Matrixkörpers 1 bezüglich der Tragstruktur 4. Der Matrixkörper 1 des Deformationselementes ist bezüglich seiner Längsachse 13 im wesentlichen senkrecht zu der Abstützung 14 an der Tragstruktur 4 angeordnet. Die Stirnseite 19 des Matrixkörpers 1 liegt an einer entsprechenden Fläche der Tragstruktur 4 an, welche auch Löcher bzw. Ausnehmungen aufweisen kann. Der Matrixkörper 1 ist dabei aus schräg gelegten, gewickelten oder geschlungenen strukturierten Blechlagen aufgebaut, wobei die so strukturierten Blechlagen entweder schräg zueinander gewickelt, geschlungen oder gelegt sind oder zwischen den schräg zueinander gelegten strukturierten Blechlagen 6 noch glatte Blechlagen 7 angeordnet sein können. Dies ist veranschaulichend in dem Kreis dargestellt, welcher eine abgewickelte Draufsicht auf die kreuzweise übereinanderliegenden Blechlagen in vereinfachter Darstellung zeigt. Bei derartig angeordneten Blechlagen ergeben sich kreuzweise ausgerichtete Kanäle 5, welche durch Wände begrenzt sind, welche einen Winkel zur Längsachse 13 des Matrixkörpers 1 bilden. Durch diese schräge Anordnung der Wände 18 erfolgt eine Krafteinleitung unter einem Winkel bezüglich der Haupterstreckungsrichtung der Wände 18.

Entsprechend einem weiteren Ausführungsbeispiel der Erfindung, welche in Fig. 3 dargestellt ist, ist der Matrixkörper 1 so aufgebaut, daß seine Längsachse 13 unter einem Winkel bezüglich der Abstützung 14 an der Tragstruktur 4 liegt. Ein derartig angeordneter Matrixkörper 1 kann in an sich bekannter Weise gewickelt, geschlungen oder gepackt sein, daß die durch die Wände gebildeten Kanäle sich im wesentlichen koaxial zur Längsachse 13 erstrecken. Es ist jedoch auch möglich, daß bei einer Anordnung gemäß dem Ausführungsbeispiel nach Fig. 3 die einzelnen Blechlagen mit ihren Strukturierungen kreuzweise bzw. winklig bezüglich der Längsachse 13 angeordnet sind Auch in diesen beiden genannten Fällen erfolgt eine Krafteinleitung unter einem Winkel bezüglich der Haupterstreckungsrichtung der Wände 18.

Gemäß einem weiteren Ausführungsbeispiel der Erfindung, welches in Fig. 4 dargestellt ist, ist der Matrixkörper 1 als kegelstumpfförmiger Matrixkörper ausgebildet. Bei einem derartig ausgebildeten Matrixkörper 1 ist die Längsachse 13 im wesentlichen senkrecht bezüglich der Abstützung 14 an der Tragstruktur 4 angeordnet. Außer dem unmittelbar die Längsachse 13 umgebenden Bereich ist die Haupterstreckungsrichtung der Wände unter einem Winkel bezüglich der in Richtung der Längsachse 13 bei einem Aufprall eingeleiteten Kräfte angeordnet. Dadurch wird bei einem solchen kegelstumpfförmigen Matrixkörper 1 zumindest ein Teil der bei dem Aufprall entwickelten Kräfte unter einem Winkel in die jeweiligen Wände eingeleitet.

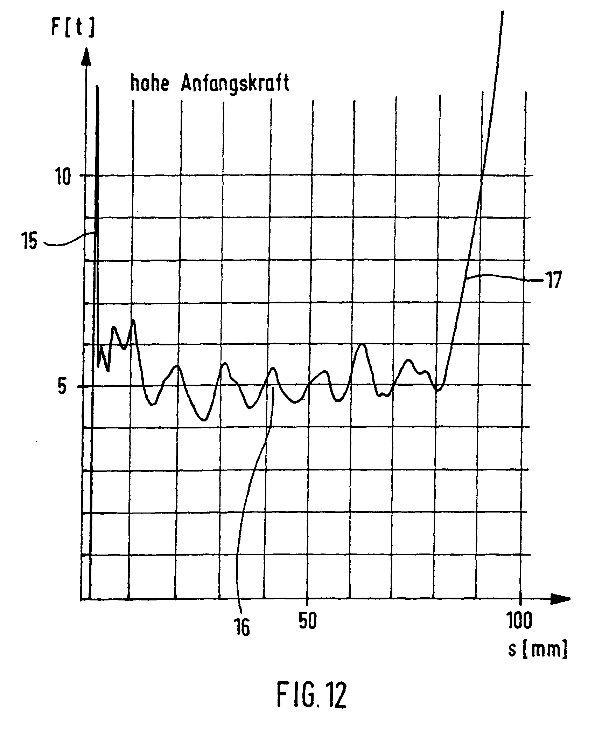

Beim Einleiten von Bewegungsenergie können sich die die Kanäle begrenzenden Wände der jeweiligen Blechlage in die entsprechenden Kanalräume deformieren, so daß ein derartiges Deformationselement theoretisch so viel bzw. so lange Bewegungsenergie absorbieren kann, solange noch Hohlräume in dem Matrixkörper 1 vorhanden sind. Die Bewegungsenergie wird dabei sowohl von dem wabenförmigen Matrixkörper 1 als auch von der Ummantelung 2 aufgenommen. Die Ummantelung kann jedoch auch so ausgebildet sein, daß sie nicht bzw. nicht wesentlich zur Aufnahme von Bewegungsenergie dient, sondern lediglich als Radialverformungsbegrenzer ausgebildet ist Nach Aufnahme von so viel Bewegungsenergie, daß sich die die Wande bildenden Teile der jeweiligen Blechlagen in die in den Kanälen vorhandenen Freiräume vollständig deformiert haben, erreicht das Deformationselement seine Endkompressionslänge, welche als Restblocklänge bezeichnet wird. Nachdem die Restblocklänge des Deformationselementes erreicht ist, ist ein weiteres Komprimieren über diese Restblocklänge hinaus nur mit einem extremen Anstieg der zur weiteren Kompression erforderlichen Kräfte möglich Fur praktische Einsatzzwecke bedeutet dies, daß bei Erreichen dieses im wesentlichen den Enddeformationszustand des Deformationselementes darstellenden Zustandes selbst bei starkem Anstieg der eingeleiteten Kräfte kaum noch Deformationsvermögen vorhanden ist. Dadurch kann eine Schädigung der Tragstruktur, an welcher das Deformationselement abgestützt ist, auftreten. Dieser Endanstieg 17 ist in Fig. 12 dargestellt.

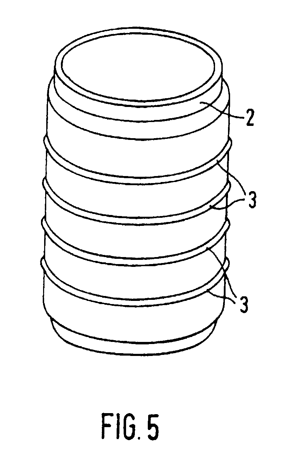

In Fig. 5 ist schematisch eine Ummantelung 2 in Form eines Mantelrohres für ein Deformationselement dargestellt. Dieses Deformationselement weist in seiner Ummantelung am Außenumfang umlaufende Sicken 3 auf. Um Deformationseigenschaften dieses Deformationselementes im Hinblick auf sein F,s-Profil gezielt zu beeinflussen, ist es des weiteren möglich, daß die Sicken 3 sich nur jeweils über einen Teilbereich des Umfangs des Mantelrohres 2 erstrecken oder daß diese Sicken auf einer Schraubenlinie um den Außenumfang des Mantelrohres 2 zumindest abschnittsweise umlaufen.

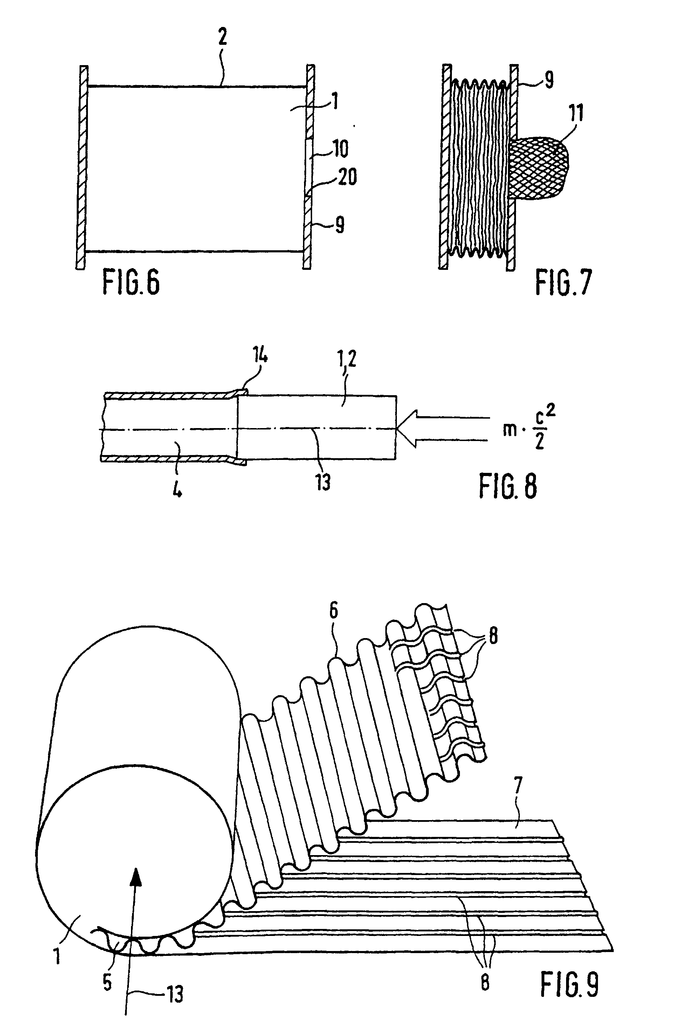

In Fig. 6 ist ein erfindungsgemäßes Deformationselement zur Verwendung in einer Tragstruktur 4 gemäß der Erfindung dargestellt. Das Deformationselement ist im Schnitt dargestellt, wobei aus Gründen der vereinfachten Darstellung der Schnitt durch den an sich bekannten Matrixkörper 1 ohne Darstellung der einzelnen Kanäle 5 bzw. Hohlräume des Matrixkörpers 1 dargestellt ist. Der Matrixkörper 1 ist mit einer Ummantelung 2 umgeben. Prinzipiell ist es jedoch auch möglich, daß der Matrixkörper 1 selbsttragend ist und das eigentliche Deformationselement darstellt. Das dargestellte Deformationselement ist in die Tragstruktur 4 so eingebaut, daß die Bewegungsenergie von links eingeleitet wird. Beim Einleiten von Bewegungsenergie nimmt das Deformationselement die Bewegungsenergie auf und setzt sie in entsprechende Deformationsenergie um, so daß sich ein definierter Deformationsweg ergibt. Die Stirnseiten des Deformationselementes sind mit jeweiligen Stützplatten (nicht gezeigt) abgedeckt. Die der Einleitung der Bewegungsenergie gegenüberliegende Stirnseite 19 des Deformationselementes ist in Form einer Lochplatte 9 ausgebildet, welche im zentralen Bereich ein Loch 10 aufweist. Das Loch 10 ist groß genug ausgebildet, daß sich infolge der Deformations- und Scherkräfte beim Einleiten entsprechend hoher Bewegungsenergien das Deformationselement auch bei Erreichen der Restblocklänge noch weiter komprimieren läßt, d.h. daß noch weitere Deformationsenergie aufgenommen werden kann.

Gemäß Fig. 7 wird dies dadurch erreicht, daß sich vor Erreichen der Restblocklänge Material des Matrixkörpers, welches sich im Bereich des Loches 10 der Lochplatte 9 befindet, bei entsprechend großer eingeleiteter Bewegungsenergie längs des Deformationsweges durch das Loch 10 hindurchschieben und damit aus dem eigentlichen Deformationselement herausschieben kann. Dadurch entsteht ein zumindest teilweise abgescherter Materialteil 11, welcher gewährleistet, daß die Restblocklänge eines derartigen erfindungsgemäßen Deformationselementes bei gegebenen Bauabmessungen weiter verringert werden kann. Dadurch können höhere Deformationsenergien aufgenommen werden, ohne daß die Gefahr besteht, daß die Tragstruktur 4, an welcher das Deformationselement abgestützt ist, Schaden nimmt.

Aus den Fig. 1 bis 7 ist ersichtlich, daß über die Parameter Ummantelungsdesign (Wandstärke, mit oder ohne Mantelsicken), Matrixkörperdesign (Zelldichte, Dicke der Blechlage) und Matrixkörpermaterial (Standardmaterial, TS-Standard oder walzplattiertes Band) das F,s-Profil des erfindunsggemäßen Deformationselementes gezielt fiir den jeweiligen Einsatzfall beeinflußbar ist.

Fig. 8 zeigt die prinzipielle Anordnung eines durch eine Tragstruktur 4 aufgenommenen Deformationselementes. Das Deformationselement ist dabei einseitig von der Tragstruktur 4 abgestützt. Auf der der Abstützung 14 gegenüberliegenden Seite des Deformationselementes wird die Bewegungsenergie in Richtung der Längsachse 13 eingeleitet, welche durch m x c²/2 dargestellt ist. Die Aufgabe des Deformationselementes besteht darin, die eingeleitete Bewegungsenergie in Verformung umzusetzen, wobei diese Verformung im Auslegungsfall des Deformationselementes nur durch dieses selbst aufgenommen werden soll, ohne daß die Tragstruktur 4 deformiert bzw beschädigt wird. Ein so dimensioniertes Deformationselement bildet somit ein Austauschteil, welches in der Tragstruktur 4 so abgestützt ist, daß es leicht demontiert und durch ein neues ersetzt werden kann. Dies spielt insbesondere eine große Rolle bei Kraftfahrzeugen, wenn ein derartiges Deformationselement fiir ein Stoßfängersystem eingesetzt ist.

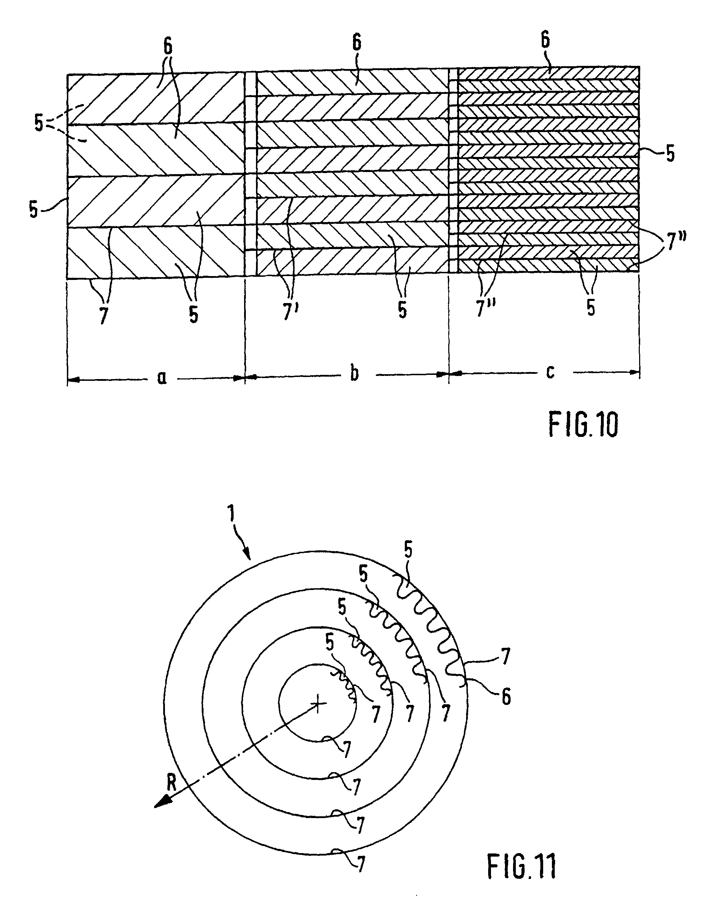

In Fig. 9 ist ein weiteres Ausführungsbeispiel für den prinzipiellen Aufbau einer Matrixstruktur fiir ein Deformationselement gezeigt. Die wabenförmige Matrixstruktur weist einen Aufbau auf, bei welchem strukturierte, mit einer Wellung versehene Blechlagen 6 in abwechselnder Reihenfolge mit im wesentlichen glatten Blechlagen 7 spiralig zu einer im wesentlichen zylindrischen Form des wabenförmigen Matrixkörpers 1 gewickelt sind. Durch die Wellungen weist der wabenförmige Matrixkörper 1 Kanäle 5 auf, welche sich in Richtung der durch den Pfeil angedeuteten Längsachse 13. Darüber hinaus weisen sowohl die gewellten Blechlagen 6 als auch die im wesentlichen glatten Blechlagen 7 des Matrixkörpers 1 zusätzlich Mikrostrukturen 8 auf, welche im wesentlichen quer zur Längserstreckung der Kanäle 5 verlaufen. Diese Mikrostrukturen 8 stellen fiir den Deformationsvorgang bei Einwirken entsprechender Bewegungsenergie Solldeformationsstellen dar, durch welche insbesondere zu Beginn des Deformationsvorganges ein ansonsten auftretender, sich im F,s-Profil darstellender übermäßiger Anfangspeak 15 (siehe Fig. 12) abbaubar ist.

In Fig. 10 ist ein weiteres Ausführungsbeispiel dargestellt. Bei diesem Ausführungsbeispiel weist das Deformationselement drei Bereiche a, b, c auf, in welchen jeweils unterschiedliche Zelldichten realisiert sind. Die Darstellung gemäß Fig. 10 ist ein Schnitt in Richtung der Kanäle 5. In Richtung der Kanäle 5 erstrecken sich über die Länge des Deformationselementes a + b + c glatte Blechlagen 7 Im Abschnitt a ist zwischen glatten Blechlagen 7 jeweils eine strukturierte Blechlage 6 mit einer Wellungsamplitude angeordnet, welche dem in radialer Richtung gemessenen Abstand zwischen den glatten Blechlagen 7 entspricht. Im Abschnitt b und c sind zusätzlich glatte Blechlagen 7' zwischen den Blechlagen 7 angeordnet, wobei zwischen den glatten Blechlagen 7 und 7' im Abschnitt b gewellte Blechlagen 6 angeordnet sind, welche eine Wellungsamplitude aufweisen, welche dem Abstand zwischen den Blechlagen 7 und 7' entspricht. Im Abschnitt c sind zusätzlich zwischen den glatten Blechlagen 7 und 7' weitere glatte Blechlagen 7" angeordnet, so daß zwischen den glatten Blechlagen 7, 7' und 7" gewellte Blechlagen 6 angeordnet sind, deren Wellungsamplitude dem Abstand zwischen den glatten Blechlagen 7 und 7" bzw. 7" und 7' entsprechen. Dadurch entsteht ein in Längsrichtung der Kanäle 5 mit einer variierenden Zelldichte ausgebildetes Deformationselement. Der Vorteil eines solchen Deformationselementes mit variierender Zelldichte besteht darin, daß das F,s-Profil in einzelnen Bereichen des Deformationselementes abschnittsweise gezielt beeinflußbar ist. Damit wird wiederum die Flexibilität der Anwendungsmöglichkeiten des Deformationselementes gemäß der Erfindung erhöht.

Fig. 11 zeigt ein weiteres Ausführungsbeispiel eines Deformationselementes, bei welchem die wabenartige Matrixstruktur 1 aus im wesentlichen konzentrisch verlaufenden, abwechselnd angeordneten glatten 7 und strukturierten Blechlagen 6 aufgebaut ist, wobei die strukturierten Blechlagen 6 in der Wellungsamplitude in Richtung des Radius R von innen nach außen zunehmen. Aus Gründen der einfachen Darstellung ist nur ein Teil der glatten Blechlage und ein Teil der mit Wellungen versehenen strukturierten Blechlagen 6 eingezeichnet. Durch die Wellungen der strukturierten Blechlagen 6 werden die Kanäle 5 gebildet. Um eine vom Inneren einer zylindrischen Matrixstruktur 1 nach außen zunehmende Zelldichte zu erzielen, ist es auch möglich, daß der Matrixkörper 1 aus einer glatten Blechlage 7 und einer darauf angeordneten strukturierten Blechlage mit in einer Richtung zunehmender Amplitude der Wellung spiralig aufgewickelt ist. Dadurch entsteht eine kontinuierliche Zunahme der Zelldichte eines derartigen wabenförmigen Matrixkörpers 1 in Richtung des Radius R von innen nach außen.

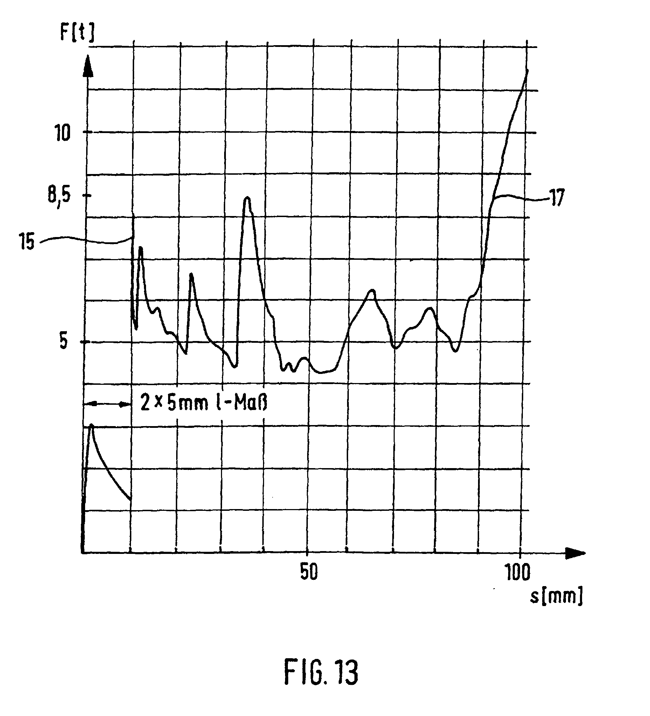

In den Fig. 12 und 13 ist beispielhaft jeweils ein F,s-Profil dargestellt. Diese F,s-Profile wurden ermittelt bei Testversuchen mit dem Matrixkörpermaterial aus Chrom und Aluminium enthaltendem Stahl (Standardmaterial) Als Matrixkörperdesign wurden 160 cpsi, 100 cpsi und 0 cpsi (nur Stauchung eines Mantels aus walzplattiertem Stahl) untersucht. Als Ummantelungsdesign wurde ein Mantel ohne Sicken, ein Mantel mit drei Sicken und ein Mantel mit acht Sicken untersucht. Als Ummantelungswandstärke wurden 0,5 mm und 0,8 mm eingesetzt. Das untersuchte Deformationselement hatte eine zylindrische Form. Die Ummantelung 2 besaß einen Überstand gegenüber dem eigentlichen wabenförmigen Matrixkörper 1 von jeweils 5 mm auf jeder Seite. Eine Lochplatte war nicht vorgesehen.

Aus Fig. 12 ist beispielhaft ein Versuchsergebnis ersichtlich, daß bei Beginn der Einleitung von entsprechender Bewegungsenergie im Deformationselement eine hohe Anfangskraft von ca. 130 kN als Spitzenkraft zu Beginn auftritt, bevor die eigentliche Deformation bei Kräften zwischen 40 und 65 kN stattfindet. Bei dem dargestellten F,s-Profil ist der Mittelbereich 16, welcher dem Anfangspeak 15 folgt, im wesentlichen konstant ausgebildet, d.h. im Mittelbereich 16 schwankt die Kraft lediglich in relativ geringem Maße um einen Mittelwert von ca. 50 kN. Bei Erreichen des Endverformungszustandes (Restblocklänge), welcher bei dem untersuchten Deformationselement bei ca. 85 mm lag, setzt der Endanstieg 17 ein. Das bedeutet, daß bei weiterer Erhohung der Druckbelastung auf das Deformationselement kaum noch ein Deformationsweg auftritt.

Werden zusätzliche Sicken in den Mantel eingebracht, wie es in Fig. 5 dargestellt ist, so verformen sich zunächst die Sicken 3 Das bedeutet, daß zunächst der Matrixkörper 1 in der Ummantelung 2 gleitet, bis die jeweiligen Schenkel der Sicken 3 unter einer Kraft von ca. 25 bis 10 kN (siehe Fig. 13) aufeinandergefaltet sind. Erst danach erfolgt gemäß Fig. 13 ein Sprung, welcher den eigentlichen Anfangspeak darstellt, auf ca. 85 kN. Indem die Materialdicke der Ummantelung von 0,8 mm auf 0,5 mm reduziert wird, kann der Anfangspeak 15, d.h. die Anfangskraft abgesenkt werden. Bedingt durch das dünnere Mantelmaterial ist die verbleibende Resthöhe eines derartigen flachgedruckten Deformationselementes etwas geringer als bei einem Mantelmaterial mit einer Dicke von 0,8 mm. Das bedeutet, daß der maximale Deformationsweg großer ist

Bei einer Stärke der Ummantelung 2 von 0,8 mm und einer Anordnung von drei Sicken kann ebenfalls die Höhe des Anfangspeaks 15 etwas gesenkt werden. Bei einer Anordnung von acht Sicken in einer Ummantelung 2 mit einer Dicke von 0,8 mm konnte der Anfangspeak 15 nicht weiter reduziert werden.

Wenn die Ummantelung 2 mit einem Überstand von jeweils 5 mm auf jeder Stirnseite des Matrixkörpers 1 vorgesehen ist, so wirkt dieser Überhang als Deformationsvorstufe.

Während das F,s-Profil gemäß Fig. 13 fiir einen Matrixkörper 1 mit 100 cpsi aufgenommen wurde, entspricht das F,s-Profil gemäß Fig. 12 einem Matrixkörper 1 mit 160 cpsi. Daraus ist ersichtlich, daß mit steigender Zelldichte die mittlere Verformungskraft im Mittelbereich 16 des F,s-Profils nicht nur verringert, sondern auch deutlich gleichmäßiger ausgebildet werden kann. Ein gleichmäßig ausgebildeter Mittelbereich 16 des F,s-Profils hat den Vorteil, daß die Bewegungsenergie durch das Deformationselement gleichmäßig absorbiert wird, was die Belastungen für die das Deformationselement abstützende Tragstruktur 4 und damit das Risiko, daß diese Tragstruktur 4 beschädigt wird, verringert.

Gegenüber Standardmaterial kann bei Verwendung eines Materials für die strukturierte Blechlage 6 mit einer Transversalstruktur in der Wellung die mittlere Deformationskraft im Mittelbereich 16 des F,s-Profils ebenfalls reduziert werden. Eine weitere Reduzierung ist erreichbar, indem anstelle der Wellung mit Transversalstruktur walzplattiertes Band verwendet wird.

### Bezugszeichenliste

- 1: Matrixkörper
- 2: Ummantelung
- 3: Sicken
- 4: Tragstruktur
- 5: Kanäle
- 6: gewellte Blechlage
- 7: glatte Blechlage
- 8: Mikrostruktur
- 9: Lochplatte
- 10: Loch
- 11: abgeschertes Materialteil
- 12: Spiralarm
- 13: Längsachse
- 14: Abstützung
- 15: Anfangspeak
- 16: Mittelbereich
- 17: Endanstieg
- 18: Wände
- 19: Stirnseite
- 20: Rand des Loches

## Patentansprüche

1. Tragstruktur (4) mit einem Deformationselement, insbesondere für ein Kraftfahrzeug, zur Absorption von Bewegungsenergie bei einem Aufprall, welches zumindest einseitig an der Tragstruktur (4) an einer Abstützung (14) abgestützt ist und einen eine Längsachse (13) aufweisenden wabenförmigen Matrixkörper (1) mit durch Wände (18) gebildeten Hohlräumen (5) aufweist,
**dadurch gekennzeichnet, daß**
das Deformationselement so an der Tragstruktur (4) befestigt ist, daß zumindest ein Teil von bei einem Aufprall entwickelten Kräften unter einem Winkel bezüglich einer Haupterstreckungsrichtung der Wände (18) in diese einleitbar ist.

2. Tragstruktur nach Anspruch 1, **dadurch gekennzeichnet, daß** der Matrixkörper (I) aus zumindest einer zumindest teilweise strukturierten Blechlage (6, 7) derart geschlungen, gewickelt oder gestapelt ist, daß die Haupterstreckungsrichtung der die Wände (18) bildenden Blechlagen (6, 7) unter einem Winkel bezüglich der Längsachse (13) angeordnet ist.

3. Tragstruktur nach Anspruch 2, **dadurch gekennzeichnet, daß** der Matrixkörper (1) eine Vielzahl von Kanälen (5) aufweist, wobei die Blechlagen (6, 7) eine Dicke von 0,02 bis 0,2 mm, vorzugsweise bei Aluminiumblechen eine Dicke von 0,1 bis 0,2 mm oder bei Stahlblechen eine Dicke von 0,02 bis 0,15 mm. aufweisen und der Matrixkörper (1) eine Zelldichte von 50 bis 600 cpsi (cells per square inch) besitzt.

4. Tragstruktur nach einem der Anspruche 1 bis 3, **dadurch gekennzeichnet, daß** die Längsachse (13) des Matrixkorpers (1) im wesentlichen senkrecht zur Abstützung (14) angeordnet ist

5. Tragstruktur nach einem der Ansprüche 1 bis 3, **dadurch gekennzeichnet, daß** die Längsachse (13) des Matrixkörpers (1) unter einem Winkel zur Abstützung (14) angeordnet ist.

6. Tragstruktur nach einem der Ansprüche 2 bis 5, **dadurch gekennzeichnet, daß** die Blechlage (6, 7) zu einem kegelförmigen oder kegelstumpfförmigen Matrixkörper (1) gewickelt, geschlungen oder gestapelt ist.

7. Tragstruktur nach einem der Ansprüche 1 bis 6, **dadurch gekennzeichnet, daß** das Deformationselement ein Deformationskraft-Deformationsweg-Profil (F,s-Profil) aufweist, welches keinen oder einen nur verhältnismäßig kleinen Anfangspeak (15) aufweist.

8. Tragstruktur nach Anspruch 7, **dadurch gekennzeichnet, daß** das F,s-Profil durch eine geeignete Vielzahl von Solldeformationsstellen in den Wänden (18) des Matrixkörpers (1) zumindest in einem Abschnitt (16) konstant ausgebildet ist.

9. Tragstruktur nach Anspruch 7 oder 8, **dadurch gekennzeichnet, daß** F,s-Profil durch eine geeignete Vielzahl von Solldeformationsstellen in den Wänden (18) des Matrixkörpers (1) zumindest in einem Abschnitt progressiv ansteigend ausgebildet ist.

10. Tragstruktur nach einem der Ansprüche I bis 9, **dadurch gekennzeichnet, daß** das Deformationselement zumindest an einer, der Abstützung (14) an der Tragstruktur (4) zugwandten Stirnseite (19) eine Lochplatte (9) mit zumindest einem Loch (10) aufweist, das so dimensioniert ist, daß im Bereich des Loches (10) befindliche Teile (11) des Matrixkörpers (1) in Richtung des Deformationsweges versetzbar sind.

11. Tragstruktur nach Anspruch 10, **dadurch gekennzeichnet, daß** die Lochplatte (9) mehrere gleichmäßig verteilte Löcher (10) aufweist.

12. Tragstruktur nach Anspruch 10 oder 11, **dadurch gekennzeichnet, daß** der Rand (20) des jeweiligen Loches (10) über mehrere Blechlagen (6, 7) verläuft.

13. Tragstruktur nach Anspruch 12, **dadurch gekennzeichnet, daß** die Größe der Löcher (10) so ausgebildet ist, daß deren jeweiliger Rand (20) über mindestens zehn Blechlagen (6, 7) verläuft.

14. Tragstruktur nach einem der Ansprüche 10 bis 13, **dadurch gekennzeichnet, daß** die Löcher (10) im Außenbereich der Lochplatte (9) angeordnet sind.

15. Tragstruktur nach einem der Ansprüche 10 bis 14, **dadurch gekennzeichnet, daß** 20 bis 80 %, vorzugsweise 40 bis 60 %, der Gesamtfläche der Lochplatte (9) Löcher (10) sind.

16. Tragstruktur nach einem der Ansprüche 10 bis 15, **dadurch gekennzeichnet, daß** die Lochplatte (9) mit ihrem Rand (20) in die Abstützung (14) der Tragstruktur (4) integriert ist.

17. Tragstruktur nach einem der Ansprüche 10 bis 16, **dadurch gekennzeichnet, daß** der Matrixkörper (1) eine Ummantelung (2) mit mehreren separaten Mantelringen aufweist.

18. Tragstruktur nach Anspruch 17, **dadurch gekennzeichnet, daß** die Ummantelung (2) als Mantelrohr durchgängig mit Sollknickstellen (3) ausgebildet ist.

19. Tragstruktur nach Anspruch 18, **dadurch gekennzeichnet, daß** die Sollknickstellen als im wesentlichen umlaufende Sicken (3) ausgebildet sind.

20. Tragstruktur nach einem der Ansprüche 17 bis 19, **dadurch gekennzeichnet, daß** die Ummantelung (2) eine Dicke von 0,5 mm bis 2,0 mm aufweist.

21. Tragstruktur nach einem der Ansprüche 3 bis 20, **dadurch gekennzeichnet, daß** die Zelldichte des Matrixkörpers (1) in Richtung der Kanäle (5) abschnittsweise variiert.

22. Tragstruktur nach einem der Ansprüche 1 bis 21, **dadurch gekennzeichnet, daß** der Matrixkörper (1) zu einem im wesentlichen zylindrischen Paket spiralig, etwa elvolventenförmig oder S-förmig gewickelt oder geschlungen ist.

23. Tragstruktur nach einem der Ansprüche 3 bis 22, **dadurch gekennzeichnet, daß** die Blechlagen (6, 7) des Matrixkörpers (1) quer oder schräg zur Richtung der Kanäle (5) sickenartige Transversalstrukturen (8) aufweisen.

24. Tragstruktur nach Anspruch 23, **dadurch gekennzeichnet, daß** die sickenartigen Strukturen (8) des Matrixkörpers (1) in Abständen von 2 mm bis 20 mm angeordnet sind.

25. Tragstruktur nach einem der Ansprüche 3 bis 24, **dadurch gekennzeichnet, daß** die Blechlagen (6, 7) des Matrixkörpers (1), durch welche die Kanäle (5) gebildet sind, seitlich versetzte Kanalabschnitte (Longitudinalstrukturen) aufweisen.

26. Tragstruktur nach einem der Ansprüche 12 bis 18, **dadurch gekennzeichnet, daß** die Blechlagen (6, 7) des Matrixkörpers (1) Wellungen mit einer gekrümmten oder einer Fischgrät-Anordnung aufweisen.

27. Tragstruktur nach einem der Ansprüche 1 bis 26, **dadurch gekennzeichnet, daß** der wabenförmige Matrixkörper (1) mit einem Schaummaterial ausgeschäumt ist.

28. Tragstruktur nach Anspruch 27, **dadurch gekennzeichnet, daß** das Schaummaterial ein insbesondere korrosionshemmender Kunststoffschaum ist.

29. Tragstruktur nach einem der Ansprüche 1 bis 28, **dadurch gekennzeichnet, daß** der maximale Deformationsweg des Deformationselementes 60 mm bis 200 mm beträgt.

30. Tragstruktur nach einem der vorhergehenden Ansprüche, **dadurch gekennzeichnet, daß** das Deformationselement zwei oder mehr Matrixkörper enthält, die so hintereinander angeordnet sind, daß sich an den aneinanderliegenden Stirnseiten beider Matrixkörper möglichst viele gegenüberliegende Blechlagen kreuzen.

31. Verwendung eines insbesondere metallischen wabenförmigen Matrixkörpers (1) mit den Merkmalen gemäß den Ansprüchen 1 bis 30 als ein Deformationselement zur Absorption von Bewegungsenergie insbesondere in einem Stoßfängersystem eines Fahrzeuges.

32. Verfahren zur Herstellung eines Deformationselementes für eine Tragstruktur gemäß einem der Ansprüche 1 bis 30, **dadurch gekennzeichnet, daß** das Deformationselement in an sich bekannter Weise hergestellt und danach einer Erststauchung mit einer Deformationskraft unterzogen wird, welche größer ist als das Maximum des Anfangspeaks im F,s-Diagramm des ungestauchten Deformationselementes.

## Claims

1. A support structure (4) having a deformation element, in particular for a motor vehicle, for the absorption of kinetic energy in the event of an impact, which deformation element is supported at least at one end on the support structure (4) at a support means (14) and has a honeycomb matrix body (1) which has a longitudinal axis (13) and cavities (5) formed by walls (18), **characterised in that** the deformation element is so fixed to the support structure (4) that at least a part of forces developed in the event of an impact can be introduced into the walls (18) at an angle with respect to a main direction in which the walls (18) extend.

2. A support structure according to claim 1 **characterised in that** the matrix body (1) is twisted, wound or stacked from at least one at least partially structured sheet metal layer (6, 7) in such a way that the main direction in which the sheet metal layers (6, 7) forming the walls (18) extend is arranged at an angle with respect to the longitudinal axis (13).

3. A support structure according to claim 2 **characterised in that** the matrix body (1) has a plurality of passages (5), wherein the sheet metal layers (6, 7) are of a thickness of 0.02 to 0.2 mm, preferably in the case of aluminium sheets a thickness of 0.1 to 0.2 mm or in the case of steel sheets a thickness of 0.02 to 0.15 mm and the matrix body (1) has a cell density of 50 to 600 cpsi (cells per square inch).

4. A support structure according to one of claims 1 to 3 **characterised in that** the longitudinal axis (13) of the matrix body (1) is arranged substantially perpendicularly to the support means (14).

5. A support structure according to one of claims 1 to 3 **characterised in that** the longitudinal axis (13) of the matrix body (1) is arranged at an angle to the support means (14).

6. A support structure according to one of claims 2 to 5 **characterised in that** the sheet metal layer (6, 7) is wound, twisted or stacked to form a conical or frustoconical matrix body (1).

7. A support structure according to one of claims 1 to 6 **characterised in that** the deformation element has a deformation force-deformation travel profile (F, s-profile) which has no or an only comparatively small initial peak (15).

8. A support structure according to claim 7 **characterised in that** the F, s-profile is made constant by a suitable number of desired deformation locations in the walls (18) of the matrix body (1) at least in one portion (16).

9. A support structure according to claim 7 or claim 8 **characterised in that** the F, s-profile is made to rise progressively by a suitable number of desired deformation locations in the walls (18) of the matrix body (1) at least in one portion.

10. A support structure according to one of claims 1 to 9 **characterised in that** at least at one end (19) which is towards the support means (14) on the support structure (4) the deformation element has an apertured plate (9) with at least one hole (10) which is so dimensioned that parts (11) of the matrix body (1), which are in the region of the hole (10), are displaceable in the direction of the deformation travel.

11. A support structure according to claim 10 **characterised in that** the apertured plate (9) has a plurality of uniformly distributed holes (10).

12. A support structure according to claim 10 or claim 11 **characterised in that** the edge (20) of the respective hole (10) extends over a plurality of sheet metal layers (6, 7).

13. A support structure according to claim 12 **characterised in that** the size of the holes (10) is such that the respective edge (20) thereof extends over at least ten sheet metal layers (6, 7).

14. A support structure according to one of claims 10 to 13 **characterised in that** the holes (10) are arranged in the outer region of the apertured plate (9).

15. A support structure according to one of claims 10 to 14 **characterised in that** 20 to 80% and preferably 40 to 60% of the total area of the apertured plate (9) are holes (10).

16. A support structure according to one of claims 10 to 15 **characterised in that** the apertured plate (9) is integrated with its edge (20) into the support means (14) of the support structure (4).

17. A support structure according to one of claims 10 to 16 **characterised in that** the matrix body (1) has a sheathing (2) with a plurality of separate peripheral rings.

18. A support structure according to claim 17 **characterised in that** the sheathing (2) is in the form of a jacket tube provided throughout with desired-bend locations (3).

19. A support structure according to claim 18 **characterised in that** the desired-bend locations are in the form of substantially peripherally extending beads (3).

20. A support structure according to one of claims 17 to 19 **characterised in that** the sheathing (2) is from 0.5 mm to 2.0 mm in thickness.

21. A support structure according to one of claims 3 to 20 **characterised in that** the cell density of the matrix body (1) varies portion-wise in the direction of the passages (5).

22. A support structure according to one of claims 1 to 21 **characterised in that** the matrix body (1) is twisted or wound in a spiral configuration, approximately in an involute shape or an S-shape, to afford a substantially cylindrical packet.

23. A support structure according to one of claims 3 to 22 **characterised in that** the sheet metal layers (6, 7) of the matrix body (1) have bead-like transverse structures (8) transversely or inclinedly with respect to the direction of the passages (5).

24. A support structure according to claim 23 **characterised in that** the bead-like structures (8) of the matrix body (1) are arranged at spacings of 2 mm to 20 mm.

25. A support structure according to one of claims 3 to 24 **characterised in that** the sheet metal layers (6, 7) of the matrix body (1) by which the passages (5) are formed have laterally displaced passage portions (longitudinal structures).

26. A support structure according to one of claims 12 to 18 **characterised in that** the sheet metal layers (6, 7) of the matrix body (1) have corrugations with a curved or a fishbone arrangement.

27. A support structure according to one of claims 1 to 26 **characterised in that** the honeycomb body (1) is filled by foaming with a foam material.

28. A support structure according to claim 27 **characterised in that** the foam material is an in particular corrosion-inhibiting plastic foam.

29. A support structure according to one of claims 1 to 28 **characterised in that** the maximum deformation travel of the deformation element is 60 mm to 200 mm.

30. A support structure according to one of the preceding claims **characterised in that** the deformation element contains two or more matrix bodies which are arranged one behind the other in such way that as many mutually oppositely disposed sheet metal layers as possible cross at the ends of two matrix bodies, which bear against each other.

31. Use of an in particular metallic honeycomb matrix body (1) having the features according to claims 1 to 30 as a deformation element for the absorption of kinetic energy, in particular in a bumper system of a vehicle.

32. A process for producing a deformation element for a support structure according to one of claims 1 to 30 **characterised in that** the deformation element is produced in per se known manner and thereafter subjected to initial upsetting with a deformation force which is greater than the maximum of the initial peak in the F, s-diagram of the non-upset deformation element.

## Revendications

1. Structure porteuse (4) comportant un élément de déformation, notamment pour un véhicule automobile, destiné à l'absorption d'énergie cinétique lors d'un impact, lequel élément de déformation étant supporté au moins d'un coté à la structure porteuse (4) à un support (14) et présentant un corps de matrice (1) en forme de nids d'abeilles avec des cavités (5) formées par des parois (18), le corps de matrice (1) ayant un axe longitudinal (13), **caractérisée en ce que** l'élément de déformation est fixé de telle manière à la structure porteuse (4) qu'au moins une partie des forces, se développant lors d'un impact, peut être introduite dans les parois suivant un angle par rapport à une direction principale d'étendue des parois (18).

2. Structure porteuse selon la revendication 1, **caractérisée en ce que** le corps de matrice (1) est entre-enroulé, enroulé ou empilé à partir d'au moins une couche de tôle (6, 7) au moins partiellement structurée de telle manière que la direction principale d'étendue des couches de tôles (6, 7) formant les parois (18) est agencée suivant un angle par rapport à l'axe longitudinal (13).

3. Structure porteuse selon la revendication 2, **caractérisée en ce que** le corps de matrice (1) présente une multiplicité de canaux (5), les couches de tôles (6, 7) ayant une épaisseur de 0,02 à 0,2 mm, dans le cas de tôles en aluminium de préférence une épaisseur de 0,1 à 0,2 mm ou dans le cas de tôles en acier une épaisseur de 0,02 à 0,15 mm et le corps de matrice (1) une densité cellulaire de 50 à 600 cpsi (cellules par pouce carré).

4. Structure porteuse selon l'une des revendications 1 à 3, **caractérisée en ce que** l'axe longitudinal (13) du corps de matrice (1) est agencé sensiblement de manière perpendiculaire par rapport au support (14).

5. Structure porteuse selon l'une des revendications 1 à 3, **caractérisée en ce que** l'axe longitudinal (13) du corps de matrice (1) est agencé suivant un angle par rapport au support (14).

6. Structure porteuse selon l'une des revendications 2 à 5, **caractérisée en ce que** la couche de tôle (6, 7) est enroulée, entre-enroulée ou empilée en un corps de matrice (1) en forme de cône ou en forme de cône tronqué.

7. Structure porteuse selon l'une des revendications 1 à 6, **caractérisée en ce que** l'élément de déformation possède un profile de force de déformation-trajet de déformation (profile F, s), qui n'a pas de crête initiale (15) ou seulement une crête initiale (15) relativement petite.

8. Structure porteuse selon la revendication 7, **caractérisée en ce que** le profile F, s est réalisé de manière constante au moins dans une section (16) par une multiplicité appropriée de points de déformation prédéterminés dans les parois (18) du corps de matrice (1).

9. Structure porteuse selon la revendication 7 ou 8, **caractérisée en ce que** par une multiplicité appropriée de points de déformation prédéterminés dans les parois (18) du corps de matrice le profile F, s est réalisé de façon à hausse progressive au moins dans une section.

10. Structure porteuse selon l'une des revendications 1 à 9, **caractérisée en ce que** l'élément de déformation présente au moins une plaque perforée (9) sur une face frontale (19), la face frontale (19) étant tournée vers le support (14) sur la structure porteuse (4), la plaque perforée (9) ayant au moins un trou (10) qui est dimensionné de telle façon que des parties (11) du corps de matrice (1) se trouvant dans la zone du trou (10) peuvent être déplacées en direction du trajet de déformation.

11. Structure porteuse selon la revendication 10, **caractérisée en ce que** la plaque perforée (9) présente plusieurs trous (10) repartis également.

12. Structure porteuse selon la revendication 10 ou 11, **caractérisée en ce que** le bord (20) du trou respectif (10) s'étend sur plusieurs couches de tôles (6, 7).

13. Structure porteuse selon la revendication 12, **caractérisée en ce que** la taille des trous (10) est réalisée de telle manière, que leur bord (20) respectif s'étend sur au moins dix couches de tôles (6, 7).

14. Structure porteuse selon l'une des revendications 10 à 13, **caractérisée en ce que** les trous (10) sont agencés dans la zone extérieure de la plaque perforée (9).

15. Structure porteuse selon l'une des revendications 10 à 14, **caractérisée en ce que** 20 à 80 %, de préférence 40 à 60 % de l'aire totale de la plaque perforée (9) sont des trous (10).

16. Structure porteuse selon l'une des revendications 10 à 15, **caractérisée en ce que** la plaque perforée (9) est intégrée avec son bord (20) dans le support (14) de la structure porteuse (4).

17. Structure porteuse selon l'une des revendications 10 à 16, **caractérisée en ce que** le corps de matrice (1) présente une enveloppe (2) avec plusieurs anneaux d'enveloppe séparés

18. Structure porteuse selon la revendication 17, **caractérisée en ce que** l'enveloppe (2) est réalisée en tant que tube d'enveloppe de façon continue avec des points destinés à l'inflexion (3).

19. Structure porteuse selon la revendication 18, **caractérisée en ce que** les points destinés à l'inflexion sont réalisés en tant que moulures encerclant (3).

20. Structure porteuse selon l'une des revendications 17 à 19, **caractérisée en ce que** l'enveloppe (2) a une épaisseur de 0,5 mm à 2,0 mm.

21. Structure porteuse selon l'une des revendications 3 à 20, **caractérisée en ce que** la densité cellulaire du corps de matrice (1) varie de section en section en direction des canaux (5).

22. Structure porteuse selon l'une des revendications 1 à 21, **caractérisée en ce que** le corps de matrice (1) est enroulé ou enlacé en une forme de spirale, environ en forme de développante ou en forme de S en un paquet sensiblement cylindrique.

23. Structure porteuse selon l'une des revendications 3 à 22, **caractérisée en ce que** les couches de tôles (6, 7) du corps de matrice (1) présentent transversalement ou obliquement à la direction des canaux (5) des structures transversales (8) à la façon de moulures.

24. Structure porteuse selon la revendication 23, **caractérisée en ce que** les structures à la façon de moulures (8) du corps de matrice (1) sont agencées à des écarts de 2 mm à 20 mm.

25. Structure porteuse selon l'une des revendications 3 à 24, **caractérisée en ce que** les couches de tôles (6, 7) du corps de matrice (1), par lesquelles les canaux (5) sont formés, présentent des sections de canaux décalés latéralement (structures longitudinales).

26. Structure porteuse selon l'une des revendications 12 à 18, **caractérisée en ce que** les couches de tôles (6, 7) du corps de matrice (1) présentent des ondulations à agencement courbé ou en arêtes de hareng.

27. Structure porteuse selon l'une des revendications 1 à 26, **caractérisée en ce que** le corps de matrice (1) en forme de nids d'abeilles est moussé avec un matériau de mousse.

28. Structure porteuse selon la revendication 27, **caractérisée en ce que** le matériau de mousse est une mousse plastique qui est notamment anti-corrosive.

29. Structure porteuse selon l'une des revendications 1 à 28, **caractérisée en ce que** le trajet de déformation maximal de l'élément de déformation comporte 60 mm à 200 mm.

30. Structure porteuse selon l'une des revendications précédentes, **caractérisée en ce que** l'élément de déformation a deux ou plus corps de matrice, qui sont agencés l'un derrière l'autre de telle façon qu'aux faces frontales adjacentes des deux corps de matrice le plus possible de couches de tôles opposées se croisent.

31. Utilisation d'un corps de matrice en forme de nids d'abeilles (1) notamment d'un corps métallique de matrice en forme de nids d'abeilles (1), avec les caractéristiques selon les revendications 1 à 30 en tant qu'élément de déformation pour l'absorption d'énergie cinétique, notamment dans un système d'amortissement de chocs d'un véhicule.

32. Procédé destiné à la fabrication d'un élément de déformation pour une structure porteuse selon l'une des revendications 1 à 30, **caractérisé en ce que** l'élément de déformation est fabriqué de manière connue en soi et est ensuite soumis à une compression initiale avec une force de déformation qui est plus élevée que le maximum de la crête initiale dans le diagramme F, s de l'élément non comprimé.
